# EUROPEAN PATENT APPLICATION

(11) **EP 1 391 253 A1**
(43) Date of publication of application: **25.02.2004**
(21) Application number: 02705448.5
(22) Date of filing: 22.03.2002
(51) Int. Cl.: B09B 3/00

(54) **DEVICE AND METHOD FOR REMOVAL OF HARMFUL SUBSTANCE**

(30) Priority: 27.04.2001 JP 2001132034; 17.10.2001 JP 2001319214
(71) Applicant: ART CERAMIC CO.,LTD., kasama-shi, Ibaraki 309-1626 (JP); E.T.I. CO.,LTD., Minato-ku, Tokyo 107-0052 (JP)
(72) Inventor: KAWASE, Koichi, Kasama-shi, Ibaraki 309-1626 (JP)
(74) Representative: Betten & Resch
(86) International application number: PCT/JP2002/002772
(87) International publication number: WO 2002/090009

(57) **Abstract**

There are provided a harmful substance removing method and apparatus wherein a workpiece containing harmful substances is heated within a crucible (30) in an unopened, hermetically sealed state of the crucible in the absence of oxygen, at a low pressure and a higher temperature, and which can improve the treatment efficiency, does not release carbon dioxide, can reduce the apparatus size and the manufacturing cost, and performs heat treatment at a relatively low temperature to reduce the running cost.

A cooling vessel (82) and gas liquefying traps (86c, 86b, 86a) and traps (94a, 94b, 94c) are provided between the crucible (30) and suction force generating vacuum pumps (90, 98), and the space between the crucible (30) and the vacuum pumps (90, 98) is kept in a hermetically sealed state. A screw (50) for introducing and discharging the workpiece into and from the crucible (30) is provided. The workpiece is fed to the screw (50) from an upward introducing member (58) which is shut off from the exterior in a hermetically sealed state, and is discharged from the screw (50) through a downward discharge member (60) which is shut off from the exterior in a hermetically sealed state. With this construction, the workpiece can be decomposed without opening the crucible (30) and therefore it is possible to enhance the treatment efficiency.

## Description

### [Field of Art]

The present invention relates to a harmful substance removing method and apparatus for thermally decomposing harmful substances within a crucible which substances are contained for example in ash from incineration, medical and organic wastes and polluted soil, and thereby making ash from incineration, etc. harmless.

### [Background Art]

Heretofore there have been known various harmful substance removing apparatuses for removing harmful substances such as PCB contained for example in ash from incineration, medical and organic wastes and polluted soil. Among conventional known harmful substance removing apparatuses, a high temperature gasifying melting furnace which burns a workpiece containing harmful substances at a high temperature and takes out the harmful substances in a gasified state from the workpiece is known to be able to remove the harmful substances safely and positively and be equipped with superior devices as peripheral devices. For this reason, incinerator manufacturers, self-governing bodies, and terminal treatment traders are interested in the high temperature gasifying melting furnace which burns a workpiece at a high temperature.

However, various harmful substance removing apparatuses and high temperature gasifying melting furnaces known heretofore involve the drawback that, since a workpiece is heated in the presence of oxygen, a large amount of carbon dioxide is produced during treatment and is discharged to the exterior. Further, in the high temperature gasifying melting furnace, since a workpiece is treated at a high temperature, intra-furnace firebricks, etc. are heavily damaged and the apparatus itself is required to be larger in size, thus giving rise to the problem that maintenance is troublesome and the running cost increases thereby.

A prior art wherein a workpiece is heated within a crucible in vacuum condition to prevent the generation of carbon dioxide has been proposed by the inventor in the present case (Japanese Patent Publication No. H07-34902). In this prior art, the crucible is opened and closed every time a workpiece is treated, thus giving rise to a drawback such that the internal temperature of the crucible drops at every opening or closing of the crucible and therefore the treatment efficiency is poor. Further, even if an attempt is made to take out gases extracted from a heated workpiece to the exterior by means of a suction device, it take time to take out the gases from the crucible.

It is an object of the present invention to provide a harmful substance removing method and apparatus capable of solving the above-mentioned problems, heating a workpiece at a low pressure and a high temperature in a hermetically sealed state of a crucible and in the absence of oxygen, capable of improving the treatment efficiency, not releasing carbon dioxide, small in size, low in manufacturing cost, and low in running cost because of heat treatment carried out at a relatively low temperature.

It is another object of the present invention to permit easy removal of gases from the interior of a crucible which gases are produced by heat treatment.

### [Disclosure of the Invention]

In the harmful substance removing method according to the present invention, for achieving the above-mentioned objects, a crucible for placing therein a workpiece containing harmful substances and a suction means are connected with each other in a hermetically sealed state, the crucible is heated by a heating means to gasify the harmful substances in the interior of the crucible, and the thus-gasified harmful substances are sucked out to the exterior from the crucible by the suction means.

In the harmful substance removing method according to the present invention, nitrogen is introduced into the crucible. The position in which nitrogen is introduced into the crucible lies on the side opposite to the side where a suction force is exerted on the interior of the crucible by the suction means. Further, a gas cooling means is disposed between the crucible and the suction means to liquefy and collect the harmful substances which have been gasified within the crucible.

The harmful substance removing apparatus according to the present invention comprises a crucible for accommodating a workpiece containing harmful substances, a heating means for heating the interior of the crucible and gasifying the harmful substances contained in the workpiece, a suction means for generating a suction force, a cooling device for liquefying and collecting the gasified harmful substances, the cooling device being disposed between the suction means and the crucible, a conveyance means communicating with the interior of the crucible to load and unload the workpiece into and from the crucible, an upward introducing member for introducing the workpiece into the conveyance means in a state capable of being shut off from the exterior in a hermetically sealed manner, and a downward discharge member for discharging the workpiece from the conveyance means in a state capable of being shut off from the exterior in a hermetically sealed manner, wherein the crucible, the cooling device, and the suction means are connected together in a closed state, and the suction force of the suction means is exerted on the interior of the crucible through the cooling device.

The harmful substance removing apparatus according to the present invention is provided with a nitrogen introducing means for introducing nitrogen into the crucible. A workpiece loading conveyance means and a workpiece unloading conveyance means are disposed on opposite sides to each other with respect to the crucible, and the suction means is disposed on the side opposite to the loading conveyance means with respect to the crucible. Further, the loading conveyance means is provided with a shaft which has a space in the interior thereof. One end of the space in the shaft is connected with the crucible and nitrogen introduced by the nitrogen introducing means is introduced into the space. Communication holes for communication between the exterior of the shaft and the space in the shaft are formed in an outer periphery of the shaft and nitrogen introduced by the nitrogen introducing means is introduced through the communication holes into the space in the shaft from the exterior of the shaft.

In the harmful substance removing apparatus according to the present invention, a spiral groove is formed in a rotational axis direction in an inner wall of the crucible and, with rotation of the crucible, the workpiece is moved along the spiral groove. Within the crucible is disposed a rake-up plate for making the workpiece drop toward a screw which serves as the conveyance means. Within the crucible, a treated residue after gasification of the harmful substances from the workpiece is dropped onto the screw by the rake-up plate. Further, plural communication passages adapted to be switched over by a switching means are formed in a position for communication between the crucible and the cooling device, and plural such cooling devices are provided in a number corresponding to the number of the communication passages. The plural cooling devices are connected together in series through connecting pipes.

Two cooling spaces are formed on the outer periphery of the crucible. In one of the cooling spaces the heating means is disposed and nitrogen is introduced, while cooling water is introduced into the other cooling space. The upward introducing member and the downward discharge member are disposed on one side with respect to the crucible and the conveyance means introduces the workpiece into the crucible and takes it out from the crucible.

### [Brief Description of the Drawings]

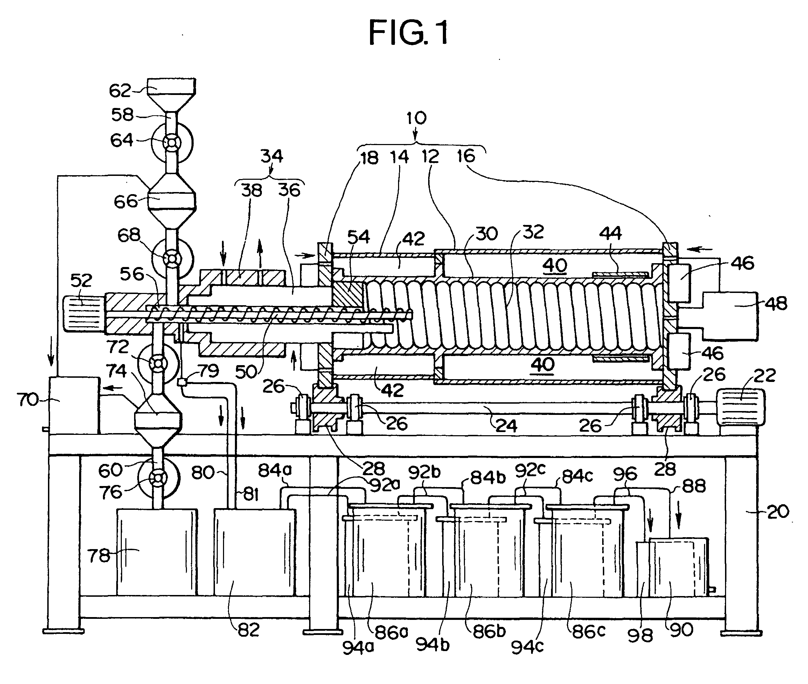

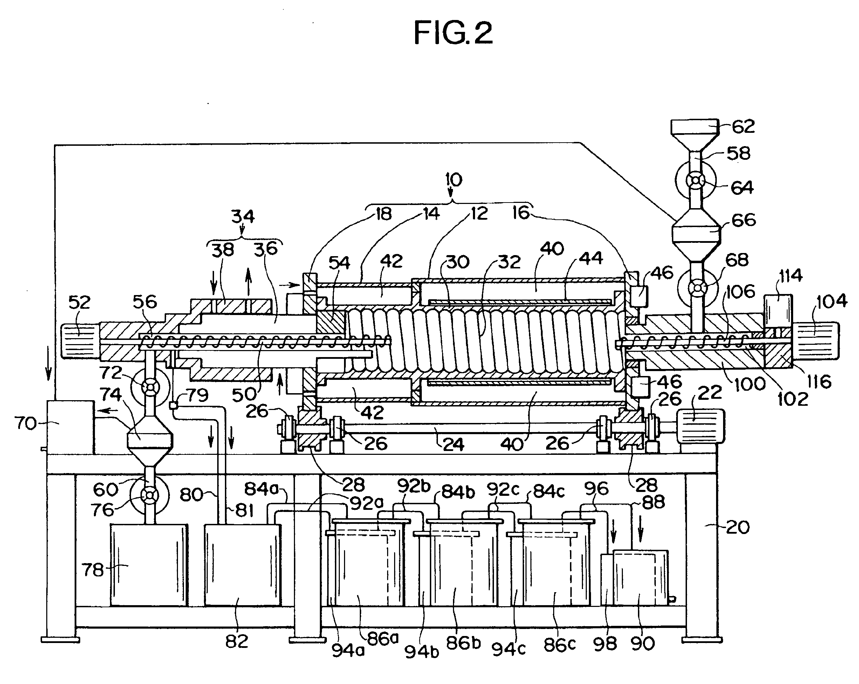

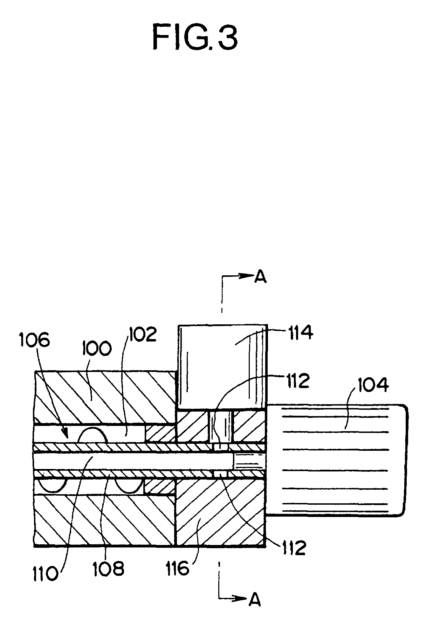

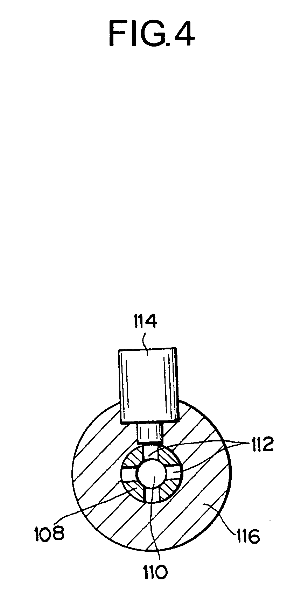

Fig. 1 is an entire construction diagram partially in section of a harmful substance removing apparatus according to an embodiment of the present invention, Fig. 2 is an entire construction diagram partially in section of a harmful substance removing apparatus according to another embodiment of the present invention, Fig. 3 is a sectional view of a principal portion of Fig. 2, and Fig. 4 is a sectional view taken on line A-A in Fig. 3.

### [Best Mode for Carrying Out the Invention]

The present invention will be described hereinunder with reference to the accompanying drawings.

Fig. 1 is an entire construction diagram of a harmful substance removing apparatus according to an embodiment of the present invention. This apparatus has a generally cylindrical body 10. The body 10 comprises, as outer components thereof, a first cylindrical member 12, a second cylindrical member 14, a first end face member 16, and a second end face member 18. Although in Fig. 1 the first and second cylindrical members 12, 14 are shown as separate members, both may be formed as a single member. The apparatus is further provided with a base 20. A reversible motor 22 is fixed to the base 20 and a rotary shaft 24 of the motor 22 is supported rotatably by bearings 26 which are fixed to the base 20. Two wheels 28, which are spaced from each other, are fixed onto the rotary shaft 24. The wheels 28 and the first and second end face members 16, 18 of the body 10 are engaged with each other. Upon turning ON of the motor 22, the body 10 is rotated at a predetermined position.

A cylindrical crucible 30 is installed within the body 10 and both ends thereof are fixed to inner walls of the first and second end face members 16, 18. The crucible 30 is adapted to rotate together with the body 10. One end of the cylindrical crucible 30 is closed with the first end face member 16. A spiral groove 32 is formed in an inner wall of the cylindrical crucible 30 so as to extend axially of the cylinder.

A workpiece entry/exit device 34 extending through the center of the second end face member 18 of the body 10 and reaching the interior of the crucible 30 is fixed to the base 20. The workpiece entry/exit device 34 comprises a cooling member 36 extending inwards and outwards through the second end face member 18 and communicating with the interior space of the cylindrical crucible 30, and a support member 38 which supports the cooling member 36. The cooling member 36, which is fixed to the base 20, is adapted to be held in a hermetically sealed state at the position of its contact with the second end face member 18 which is rotating. Cooling water is fed from a cooling water circulating means (not shown) into the cooling member 36 through the support member 38, and the cooling water which has circulated through the cooling member 36 passes through the support member 38 and is returned to the cooling water circulating means. Since this technical contents are publicly known, an explanation thereof will here be omitted.

In the interior of the body 10 and in the exterior of the cylindrical crucible 30, a first space 40 as a cooling space for accommodating gases therein is formed on the first end face member 16 side, while on the second end face 18 side is formed a second space 42 as a cooling space for accommodating cooling water therein. Within the first space 40 and in the vicinity of the first end face member 16, a high-frequency coil 44 as a heating means for heating the crucible 30 is mounted over the outer periphery of the crucible. The high-frequency coil 44 is adapted to heat a workpiece up to about 800°C according to the type of the workpiece which is introduced into the crucible 30. The heating temperature is freely adjustable.

A cooling means 46 and a nitrogen introducing means 48 are attached to the outside of the first end face member 16 and are adapted to rotate together with the first end face member 16 (body 10). The cooling means 46 is for introducing cooling water therein in accordance with an appropriate timing and cooling the workpiece present within the crucible 30. The nitrogen introducing means 48 supplies nitrogen into the first space 40, whereby the interior of the first space 40 is filled with nitrogen. The nitrogen introducing means 48 further supplies a small amount of nitrogen intermittently into the interior space of the crucible 30 through the first end face member 16.

In the interior of the cooling member 36 and that of the support member 38 is formed a horizontal space 56 which provides communication between both members 36 and 38, and a screw 50 serving as a conveyance means is disposed within the space 56. The screw 50 comprises a shaft and a spiral rib or guide formed on an outer periphery of the shaft. With rotation of the screw 50, the workpiece is moved along the space formed between spiral rib or guide portions. One end of the cooling member 36 and one end of the screw 50 are exposed to the interior space of the cylindrical crucible 30. The screw 50 extends to the interior of the crucible 30 to a greater extent than the cooling member 36. On an end of the screw 50 opposite to the crucible 30 side there is mounted a screw motor 52 for rotating the screw 50 in a reversible manner. In the cooling member 36, a rake-up plate 54 for scraping off the workpiece adhered to the inner wall of the crucible 30 is mounted on the interior space side of the crucible.

A tubular, upward introducing member 58 extending upward above the space 56 and a tubular, downward discharge member 60 extending downward below the space 56 are fixed to the support member 38 so as to communicate with the screw motor 52 side of the space 56. The upward introducing member 58 introduces the workpiece in a hermetically sealed state into the space 56, while the downward discharge member 60 discharges the workpiece downward from the space 56 also in a hermetically sealed state. The upward introducing member 58 is provided with a receiving hopper 62 at an upper end thereof for the storage of workpiece, a rotary valve 64 which underlies the receiving hopper 62, a vacuum compensation chamber 66 which underlies the rotary valve 64, and a rotary valve 68 which underlies the vacuum compensation chamber 66. The interior of the vacuum compensation chamber 66 is made vacuous by an evacuating device 70. That is, the workpiece which has entered the vacuum compensation chamber 66 is held in a state of vacuum, and when the workpiece is introduced into the space 56, the space 56 is kept airtight.

In the downward discharge member 60 there are provided, successively from above to below, a rotary valve 72, a vacuum compensation chamber 74 which underlies the rotary valve 72, and a rotary valve 76 which underlies the vacuum compensation chamber 74. A lower end of the downward discharge chamber 60 is connected to a discharge tank 78. The interior of the vacuum compensation chamber 74 is also made vacuous by the evacuating device 70. That is, the vacuum compensation chamber 74 is made vacuous before a residue of the workpiece is discharged from the space 56 to the discharge tank 78, thereby keeping the space 56 airtight.

The space 56 positioned in the support member 38 is connected to two connecting pipes (connecting passages) 80 and 81 through a change-over valve 79, which pipes 80 and 81 are connected to a cooling vessel 82. The change-over valve 79 connects either the connecting pipe 80 or the connecting pipe 81 to the space 56 in the support member 38. Traps 86a, 86b, and 86c as cooling devices are connected in series with the cooling vessel 82 through connecting pipes 84a, 84b, and 84c, the trap 86c located at the last position of the series connection being connected through a connecting pipe 88 to a vacuum pump 90 which serves as a suction means. Further, traps 94a, 94b, and 94c as cooling devices are connected in series with the cooling vessel 82 through connecting pipes 92a, 92b, and 92c, the trap 94c located at the last position of the series connection being connected through a connecting pipe 96 to a vacuum pump 98 which serves as a suction means.

The cooling vessel 82 is for cooling gases introduced therein to about 60°C to 70°C which gases have been cooled to about 200°C to 600°C by the cooling water passing through the cooling means 36. The traps 86a, 86b, 86c and the traps 94a, 94b, 94c are for liquefying and collecting the gases at a low temperature of, say, 2°C after having been cooled to about 60°C to 70°C. It is preferable to adopt different cooling temperatures so that the substance liquefied in the traps 86a and 94a, the substance liquefied in the traps 86b and 94b, and the substance liquefied in the traps 86c and 94c, are different from one another. Although in Fig. 3 three traps 86a, 86b, 86c and three traps 94a, 94b, 94c are connected in series respectively, the number of series-connected traps is not limited to three.

The connecting pipes 84a, 84b, 84c, and 88 are connected to upper positions in the interior spaces of the cooling vessel 82 and the plural traps 86a, 86b, 86c. The vacuum pump 90 is designed so that a vacuum pressure (negative pressure) generated thereby reaches the connecting pipes 80 and 81 through the plural traps 86c, 86b, 86a and the cooling vessel 82. Likewise, the connecting pipes 92a, 92b, 92c, and 96 are connected to upper positions in the interior spaces of the cooling vessel 82 and the plural traps 94a, 94b, 94c and the vacuum pump 98 is designed so that a vacuum pressure generated thereby reaches the connecting pipes 80 and 81 through the plural traps 86c, 86b, 86a and the cooling vessel 82.

Either the connecting pipe 80 or 81 is connected through the change-over valve 79 and further through the downward discharge member 60 to the space 56 which accommodates the screw 50 therein. The space 56 is connected to the interior space of the crucible 30 and therefore, when the vacuum pump 90 or 98 is turned ON, the vacuum pressure from the pump reaches the interior space of the crucible 30 as a low pressure. That is, the vacuum pump 90 (98) communicates with the interior of the crucible 30 in a hermetically sealed state (a hermetically isolated state).

Next, the following description is provided about decomposing a workpiece.

The rotary valve 64 is opened and a predetermined amount of a workpiece is fed from the receiving hopper 62 which contains the workpiece into the vacuum compensation chamber 66. Thereafter, the rotary valve 64 is closed and the workpiece is put in a state of vacuum by the evacuating device 70 within the vacuum compensation chamber 66. Subsequently, the rotary valve 64 is opened and the workpiece which has been rendered vacuous is dropped onto the screw 50.

At this time, the change-over valve 79 is operated to provide communication between the connecting pipe 80 and the space 56 in the support member 38, and the vacuum pump 90 is actuated to let the vacuum pressure from the vacuum pump 90 reach the interior space of the crucible 30. Although the pressure in the vacuum pump 90 is vacuum pressure, the pressure in the interior space of the crucible 30 is a low pressure close to vacuum pressure. Further, the screw motor 52 is turned ON to rotate the screw 50 and likewise the motor 22 is turned ON to rotate both body 10 and crucible 30.

The workpiece which has dropped onto the screw 50 moves on the surface of the screw 50 with rotation of the screw and is introduced into the crucible 30. Then, with rotation of the crucible 30 (body 10), the workpiece which has been introduced into the crucible 30 moves toward the first end face member 16 along the spiral groove 32. When the workpiece arrives at a position close to the first end face member 16, it is heated by the high-frequency coil 44. The heating is conducted at a temperature (e.g., 240°C to 800°C) which gasifies the harmful substances contained in the workpiece present within the crucible 30. The temperature of the heating by the high-frequency coil 44 is adjusted according to the type of the harmful substances contained in the workpiece.

Consequently, in the interior of the crucible 30, the workpiece is heated in a state of a reduced pressure based on the low pressure from the vacuum pump 90 and that at a high temperature by the high-frequency coil 44.

As the workpiece is heated by the high-frequency coil 44, the harmful substances contained in the workpiece are decomposed and gasified. For example, such oils as benzene, toluene, and xylene gasify at a temperature of 240°C or higher. Likewise, chlorine contained in the workpiece gasifies at a temperature of 300°C or higher. Therefore, the high-frequency coil 44 first heats the workpiece at a temperature below the chlorine gasifying temperature and, after completion of the heating, heats the workpiece at the chlorine gasifying temperature or higher. If the workpiece is heated at a temperature (e.g., 240°C to 290°C) not causing gasification of chlorine, oils such as benzene, toluene, and xylene are gasified from the workpiece.

After such oils as benzene, toluene, and xylene contained in the workpiece have been fully gasified within the crucible 30, a suction force is exerted on the resulting gases, whereby the gases are sucked from the crucible 30 into the vacuum pump 90 through the space 56 in the support member 38, connecting pipe 80, cooling vessel 82, and further through the traps 86a, 86b, 86c. However, with this suction force alone, it takes time for the gases generated in the interior of the crucible 30 to be discharged from the crucible interior.

To avoid this inconvenience, a small amount of nitrogen is injected from the nitrogen introducing device 48 into the crucible 30 intermittently or continuously. For example, every second, about 1 cc of nitrogen is injected into the crucible. The nitrogen thus injected into the crucible 30 expands under the high temperature in the crucible. Such oils as benzene, toluene, and xylene which have been gasified from substances contained in the workpiece are not only pushed by nitrogen which has been injected into the crucible 30 and expanded, but also are sucked by the vacuum pump 90 and are moved toward the same vacuum pump. Since nitrogen is thus introduced successively into the crucible 30, even if a small amount of oxygen is originally contained in the crucible 30, the oxygen is eliminated from the crucible interior and the workpiece is heated in the absence of oxygen. By thus introducing a small amount of nitrogen into the crucible 30, the introduced nitrogen causes the gases generated in the crucible to move smoothly, thereby making it possible to take out the gases smoothly from the interior of the crucible. It is preferable that the nitrogen introducing position be established on the side opposite to the vacuum pump 90 with the generated gases as the center. If any other gas (oxygen, hydrogen, or carbon dioxide) than nitrogen is introduced into the crucible 30, an inconvenience will result. Therefore, also from the economic viewpoint, nitrogen is preferred as the gas introduced into the crucible 30.

The gases produced by gasification from substances contained in the workpiece within the crucible 30 are conveyed from the crucible to the cooling vessel 82 through the space 56 in the support member 38 and further through the connecting pipe 80 by virtue of the suction force created by the vacuum pump 90 and with nitrogen which has expanded within the crucible 30. Until reaching the space 56 in the support member 38 after leaving the crucible 30, the gases resulting from gasification in the crucible are cooled to some extent with the cooling water present within the cooling member 36, nitrogen present within the first space 40, and the cooling water used in the cooling means 46.

The gases which have reached the cooling vessel 82 are cooled there to a temperature of about 60°C to 70°C, then are cooled into liquid in the traps 86a, 86b, and 86c and are stored therein. The substances resulting from decomposition and gasification of harmful substances are liquefied until reaching the vacuum pump 90 and only clean air is discharged from the vacuum pump 90. The substances thus stored in the traps 86a, 86b, and 86c can be separated into individual substances and re-utilized as recycling materials.

After the workpiece has been sufficiently heated at a temperature not causing gasification of chlorine to remove oils, the heating temperature of the high-frequency coil 44 is raised to heat the workpiece at a temperature (e.g., 300°C to 800°C) at which chlorine gasifies. At the same time, the change-over valve 79 is operated to provide communication between the connecting pipe 81 and the space 56 in the support member 38. Further, the vacuum pump 98 is operated. When the workpiece is heated at a chlorine gasifying temperature, chlorine gasifies from the workpiece. After the chlorine contained in the workpiece has been gasified to a sufficient extent within the crucible 30, a vacuum pressure (negative pressure) from the vacuum pump 98 is exerted on the interior of the crucible and a small amount of nitrogen is injected from the nitrogen introducing device 48 into the crucible 30 intermittently or continuously. With nitrogen injected into the crucible 30 and expanded at a high temperature and with a suction force induced by the vacuum pump 98, the gasified chlorine is moved toward the vacuum pump 98.

More specifically, the chlorine gasified within the crucible 30 passes through the connecting pipe 81 and reaches the cooling vessel 82, in which it is cooled to about 60°C to 70°C, then is further cooled in the traps 94a, 94b, and 94c. The substances containing the gasified chlorine are liquefied and stored in the traps 94a, 94b, and 94c. The substances with harmful substances decomposed and gasified are liquefied until reaching the vacuum pump 98 and only clean air is discharged from the vacuum pump 98. The substances stored in the traps 94a, 94b, and 94c can be separated into individual substances and re-utilized as recycling materials.

The reason for separation into chlorine-free and chlorine-containing substances is that if the chlorine-containing substances are mixed with other substances, there may occur dioxin, and that therefore it is intended to eliminate such a fear.

Within the crucible 30 there remains a residue of the workpiece which has been rendered harmless by heating and decomposing harmful substances. Thereafter, the rotation of the motor 22 is reversed to let the body 10 rotate in the opposite direction, whereby the residue thus rendered harmless moves through the interior of the crucible 30 along the spiral groove 32 and reaches the second end face member 18. The residue which has thus moved is then peeled off from the inner wall of the crucible 30 by means of the rake-up plate 54 fixed to the cooling member 36 and is dropped onto the screw 50. At this time, if the rotation of the screw motor 52 is reversed to let the screw 50 rotate in the opposite direction, the harmless residue moves to the screw motor 52 side along the surface of the screw 50 and through the interior of the space 56. The harmless residue which has thus moved through the space 56 is then dropped into the downward discharge member 60, then is introduced and stored into the discharge tank 78 through the vacuum compensation chamber 74.

Although in this embodiment the number of connecting pipes connected to the cooling vessel 82 through the change-over valve 79 is set two (connecting pipes 80 and 81), there may be used three or more such pipes. If the number of connecting pipes is set three or more, the number of passages connected in series with traps as cooling devices from the cooling vessel 82 through connecting pipes is set three or more.

Next, another embodiment of the present invention will be described below with reference to Figs. 2 to 4.

Fig. 2 is an entire construction diagram of a harmful substance removing apparatus according to another embodiment of the present invention, in which the same reference numerals as in Fig. 1 represent the same components.

In the previous first embodiment illustrated in Fig. 1, the workpiece introducing position and the workpiece discharge position are established on the same side with respect to the cylindrical crucible 30, but in this second embodiment illustrated in Fig. 2, both such positions are established on opposite sides with respect to the cylindrical crucible 30. A support member 100 is fixed to a first end face member 16 on the side opposite to the cylindrical crucible 30 which is fixed to the first end face member. A cylindrical space 102 is formed in the interior of the support member 100 and is in communication on one side thereof with the interior of the crucible 30. In the interior of the space 102 is disposed a screw 106 as a loading conveyance means which is rotated by means of a motor 104. The screw 106 comprises a shaft 108 and a spiral rib or guide formed on the outer periphery of the shaft 108. With rotation of the screw 106, the spiral rib or guide causes a workpiece introduced into the space 102 to move in a predetermined direction.

An upward introducing member 58 extending upward from the space 102 is connected and fixed to the support member 100. The upward introducing member 58 is provided with a receiving hopper 62 formed at an upper end thereof for the storage of workpiece, a rotary valve 64 which underlies the receiving hopper 62, a vacuum compensation chamber 66 which underlies the rotary valve 64, and a rotary valve 68 which underlies the vacuum compensation chamber 66. The interior of the vacuum compensation chamber 66 is made vacuous by means of an evacuating device 70. The upward introducing member 58 introduces the workpiece in a hermetically sealed state into the space 102. When the workpiece is to be introduced into the space 102, the workpiece introduced into the receiving hopper 62 is brought into a state of vacuum in the vacuum compensation chamber 66 and is then introduced into the space 102 while being kept in vacuum. The workpiece thus introduced into the space 102 is moved toward the crucible 30 with rotation of the screw 106 and is eventually introduced into the crucible 30.

As shown in Fig. 3, the shaft 108 of the screw 106 has a cylindrical shape having an inner space 110. As shown in Figs. 3 and 4, plural communication holes 112 are formed in the shaft 108 of the screw 106 at a position near a shaft end on the side opposite to the crucible 30, the communication holes 112 being formed in one face of the shaft 108 in a direction perpendicular to the shaft axis so as to extend through the shaft to both inside and outside of the shaft. A nitrogen introducing means 114 for the supply of nitrogen is attached to the support member 100 in such a manner that the nitrogen fed from the nitrogen introducing means 114 can be introduced into the inner space 110 of the shaft 108 from the communication holes 112 formed in the shaft 108 of the screw 106. External openings of the communication holes 112 are closed with a sealing member 116 except when nitrogen is introduced into the space 110 from the nitrogen introducing means 114.

According to the above construction, the workpiece introduced into the receiving hopper 62 reaches the space 102 in the support member 100 from the upward introducing member 58 and is then introduced into the crucible 30 with rotation of the screw 106. Then, in the same way as in the first embodiment, the workpiece thus introduced into the crucible 30 is heated by the high-frequency coil 44, allowing harmful substances contained in the workpiece to gasify. At the same time, nitrogen which is fed from the nitrogen introducing means 114 passes through the communication holes 112 formed in the shaft 108 and is introduced into the space of the shaft 108 intermittently. That is, nitrogen is introduced intermittently into the interior space of the crucible 30.

In the second embodiment illustrated in Fig. 2, the workpiece introducing position and the workpiece discharge position are established on opposite sides with respect to the crucible 30, so in comparison with the first embodiment illustrated in Fig. 1 (both such positions lie on the same side with respect to the body 10), not only the workpiece can be introduced continuously into the crucible 30 but also it can be discharged continuously from the interior of the crucible, whereby the treatment efficiency can be improved to a greater extent.

In this second embodiment, moreover, the space 110 is formed in the interior of the shaft 108 of the screw 106 and nitrogen is introduced from the space 110 into the crucible 30. In this connection, plural communication holes 112 are formed in the periphery of the shaft 108 and nitrogen fed from the nitrogen introducing means 114 is introduced into the space 110 of the shaft 108 from the exterior of the communication holes 112. Consequently, with rotation of the shaft 108, nitrogen can be introduced intermittently into the space 110 of the shaft 108.

### [Industrial Applicability]

According to the present invention, as described above, harmful substances are heated in a hermetically sealed crucible in the absence of oxygen at a low pressure and that at a high temperature. Besides, the workpiece containing the harmful substances are allowed to pass through the interior of the crucible automatically. Therefore, in comparison with the prior art wherein a door is opened and closed and a workpiece is fed and discharged by manual operation, the thermal efficiency is very high and the rate of decomposition is high enough to treat a large amount of workpiece. Since the crucible is not opened, it is possible to effect heat treatment at a relatively low temperature and hence possible to reduce the running cost. Moreover, since harmful substances are removed by a cooling device, there is no fear that carbon dioxide and offensive smell may be discharged to the exterior.

Further, by introducing nitrogen into the crucible, coupled with the suction force of the suction means, the harmful substances gasified within the crucible can be taken out from the crucible easily.

Additionally, the treated residue and extracted substances can be re-utilized as recycling materials and thus not only the running cost is reduced but also there can be obtained such earnings as consignment treatment cost and secondary product sales. Thus, there can be attained both high treating capacity and complete recycling for wastes containing harmful substances.

## Claims

1. A method for removing harmful substances, which method comprises connecting a crucible for placing therein a workpiece containing harmful substances and a suction means with each other in a hermetically sealed state, heating said crucible by a heating means to gasify the harmful substances in the interior of the crucible, and sucking the gasified harmful substances to the exterior from said crucible by said suction means.

2. The method of claim 1, wherein nitrogen is introduced into said crucible.

3. The method of claim 2, wherein the position in which nitrogen is introduced into said crucible lies on the side opposite to the side where a suction force is exerted on the interior of the crucible by said suction.

4. The method of claim 1, wherein a gas cooling means is disposed between said crucible and said suction means, and the harmful substances gasified within said crucible are liquefied and collected in said cooling means.

5. A harmful substance removing apparatus comprising a crucible for accommodating a workpiece containing harmful substances, a heating means for heating the interior of said crucible and gasifying the harmful substances contained in the workpiece, a suction means for generating a suction force, a cooling device for liquefying and collecting the gasified harmful substances, said cooling device being disposed between said suction means and said crucible, a conveyance means communicating with the interior of said crucible to load and unload the workpiece into and from the crucible, an upward introducing member for introducing the workpiece into said conveyance means in a state capable of being shut off from the exterior in a hermetically sealed manner, and a downward discharge member for discharging the workpiece from said conveyance means in a state capable of being shut off from the exterior in a hermetically sealed manner, wherein said crucible, said cooling device, and said suction means are connected together in a closed state, and the suction force of said suction means is exerted on the interior of said crucible through said cooling device.

6. The apparatus of claim 5, further comprising a nitrogen introducing means for introducing nitrogen into said crucible.

7. The apparatus of claim 6, wherein a workpiece loading conveyance means and a workpiece unloading conveyance means are disposed on opposite sides to each other with respect to said crucible, and said suction means is disposed on the side opposite to said workpiece loading conveyance means with respect to said crucible.

8. The apparatus of claim 7, wherein said workpiece loading conveyance means is provided with a shaft which has a space in the interior thereof, one end of the space in said shaft is connected with said crucible, and nitrogen introduced by said nitrogen introducing means is introduced into said space.

9. The apparatus of claim 8, wherein communication holes for communication between the exterior of said shaft and said space in the shaft are formed in an outer periphery of the shaft, and nitrogen introduced by said nitrogen introducing means is introduced through said communication holes into said space in the shaft from the exterior of the shaft.

10. The apparatus of claim 5, wherein a spiral groove is formed in a rotational axis direction in an inner wall of said crucible and, with rotation of the crucible, the workpiece is moved along said spiral groove.

11. The apparatus of claim 5, further comprising a rake-up plate disposed within said crucible to make the workpiece drop toward said conveyance means, and, within said crucible, a treated residue after gasification of the harmful substances from the workpiece is dropped onto said conveyance means by said rake-up plate.

12. The apparatus of claim 5, wherein a plurality of communication passages adapted to be switched over by a switching means are formed in a position for communication between said crucible and said cooling device, and a plurality of said cooling devices are provided in a number corresponding to the number of said communication passages.

13. The apparatus of claim 5, wherein a plurality of said cooling devices are connected together in series through connecting pipes.

14. The apparatus of claim 5, wherein two cooling spaces are formed on an outer periphery of said crucible, and in one of said cooling spaces said heating means is disposed and nitrogen is introduced, while cooling water is introduced into the other cooling space.

15. The apparatus of claim 5, wherein said upward introducing member and said downward discharge member are disposed on one side with respect to said crucible, and said conveyance means introduces the workpiece into said crucible and takes it out from the crucible.
